Europäisches Patentamt

European Patent Office

Office européen des brevets

(11) Veröffentlichungsnummer: **0 288 783 B1**

(12) **EUROPÄISCHE PATENTSCHRIFT**

(45) Veröffentlichungstag der Patentschrift: **12.01.94**

(51) Int. Cl.⁵: **H04N 7/137**

(21) Anmeldenummer: **88105405.0**

(22) Anmeldetag: **05.04.88**

(54) **Anordnung zur DPCM-Codierung von Fernsehsignalen.**

(30) Priorität: **28.04.87 DE 3714130**

(43) Veröffentlichungstag der Anmeldung:
**02.11.88 Patentblatt 88/44**

(45) Bekanntmachung des Hinweises auf die
Patenterteilung:
**12.01.94 Patentblatt 94/02**

(84) Benannte Vertragsstaaten:
**DE FR GB IT NL**

(56) Entgegenhaltungen:
**DE-A- 3 331 426**
**GB-A- 2 003 001**
**US-A- 4 200 886**
**US-A- 4 202 011**
**US-A- 4 546 386**

**PATENT ABSTRACTS OF JAPAN Band 8, Nr.**
**256 (E-280), 22. November 1984; & JP-A-**
**59128881 (NIPPON DENKI) 25.07.1984**

(73) Patentinhaber: **SIEMENS AKTIENGESELL-**
**SCHAFT**
**Wittelsbacherplatz 2**
**D-80333 München(DE)**

(72) Erfinder: **Matthiesen, Fred, Dipl.-Ing.**
**Kolumbusstrasse 19**
**D-8000 München 90(DE)**
Erfinder: **Schöbinger, Matthias, Dr. phil. nat.**
**Schleissheimerstrasse 71**
**D-8000 München 40(DE)**
Erfinder: **Totzek, Ulrich, Dr.Ing.**
**Herzogstandstrasse 6**
**D-8000 München 90(DE)**
Erfinder: **Zehner, Bernd, Dr.Ing.**
**Therese-Giehse-Allee 23**
**D-8000 München 83(DE)**

## Beschreibung

Die Erfindung bezieht sich auf eine Anordnung zur DPCM-Signalcodierung von Fernsehsignalen nach dem Oberbegriff des Patentanspruchs 1.

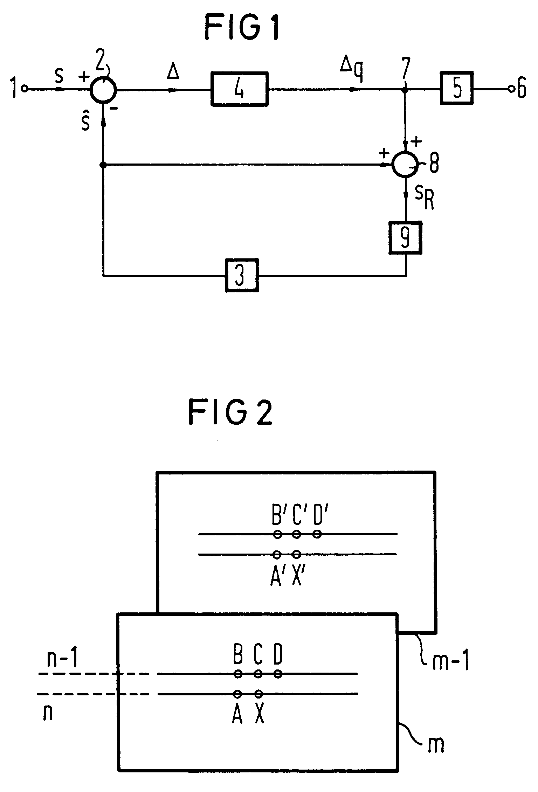

Eine Anordnung dieser Art, die zum Beispiel aus den Proc. IEEE Bd. 73, Nr. 4, April 1985, Seiten 592 bis 598, vergleiche insbesondere Figuren 1, 2 und 4, bekannt ist, sei anhand eines in Figur 1 dargestellten Prinzipschaltbildes erläutert. Dabei liegt an einem Eingang 1 der Anordnung eine Folge von digitalisierten Bildpunktsignalen s an, die über im einzelnen nicht dargestellte Abtast- und Haltestufen zugeführt werden. Zur Reduktion des Datenflusses bemüht man sich, redundante und irrelevante Anteile des Bildsignals herauszunehmen, um beispielsweise die Bitübertragungsrate senken zu können, ohne die Bildqualität hierdurch zu verschlechtern. Im einzelnen geschieht dies dadurch, daß nicht die aufeinanderfolgenden Bildpunktsignale über den zu einer Empfangsstelle führenden Übertragungskanal übertragen werden, sondern nur die Differenzsignale, die durch eine Differenzbildung zwischen jeweils einem aktuellen Bildpunktsignal s und einem aufgrund der vorausgegangenen Bildpunktsignale in einem Prädiktor ermittelten Schätzwert $\hat{s}$ gebildet werden. Ein solches Verfahren wird auch als Differenz-Pulscodemodulation (DPCM) bezeichnet.

Ferner ist aus der britischen Anmeldeschrift GB-A-2 003 001 (Pearson) eine Anordnung zur Kodierung von digitalen Fernsehsignalen bekannt, bei der vor einer Kanalkodierung von einem Fernsehsignal ein Schätzsignal subtrahierbar und das entstehende Differenzsignal quantisierbar ist und bei der das quantisierte Differenzsignal zum Schätzsignal addierbar und einem Register zuführbar ist, das gleichzeitig, abhängig von einer Überlauflogik, auch eine Begrenzerfunktion erfüllt und am Ausgang das Schätzsignal liefert.

Die für eine DPCM-Codierung erforderliche Differenzbildung geschieht in einem Subtrahierer 2, dessen erster Eingang mit dem Eingang 1 und dessen zweiter Eingang mit einem Prädiktor 3 beschaltet ist. Jedes Differenzsignal $\Delta$, das auch als Schätzfehler bezeichnet wird, wird in einem Quantisierer 4 quantisiert, wobei das sich ergebende, mit dem Quantisierungsfehler q behaftete Differenzsignal $\Delta_q = \Delta + q$ in einem Codierer 5 codiert und über einen Ausgang 6 dem Übertragungskanal zugeführt wird. Zur Bildung des Schätzwertes $\hat{s}$ ist ein rekursiver Signalpfad vorgesehen, der von einem Schaltungspunkt 7 ausgangsseitig vom Quantisierer 4 ausgeht, einen ersten Addierer 8, eine Begrenzereinrichtung 9 und den Prädiktor 3 enthält und an den zweiten Eingang des Subtrahierers 2 geführt ist. Der Ausgang des Prädiktors 3 ist weiterhin mit einem zweiten Eingang des ersten Addierers 8 verbunden, des durch Addition des quantisierten Differenzsignals $\Delta_q$ und des Schätzwertes $\hat{s}$ ein sog. rekonstruiertes Bildpunktsignal $s_R$ bildet. Für jedes aktuelle Bildpunktsignal s liefert der Prädiktor 3 aus wenigstens einem der vorhergegangenen Bildpunktsignale den Schätzwert $\hat{s}$.

Bezeichnet man gemäß Fig. 2 den in einem Fernsehbild m in der Zeile n liegenden, aktuellen Bildpunkt mit X, den unmittelbar vorher abgetasteten Bildpunkt mit A, den X entsprechenden Bildpunkt der vorhergehenden Zeile n - 1 mit C und die dem letzteren benachbarten, unmittelbar vor bzw. nach diesem abgetasteten Bildpunkte mit B und D und bezeichnet man weiterhin die entsprechenden Bildpunkte des vorhergegangenen Bildes m - 1 mit X' und A' bis D', so ergibt sich folgendes: Man kann zur Bildung des Schätzwertes $\hat{s}$ für das Bildpunktsignal von X die Bildpunktsignale von wenigstens einem der Punkte A bis D heranziehen, wobei man von einer zweidimensionalen (2D-) Prädiktion spricht. Verwendet man hierzu zusätzlich oder ausschließlich die Bildpunktsignale von wenigstens einem der Bildpunkte X' und A' bis D', so liegt eine dreidimensionale (3D-) Prädiktion vor. Im ersteren Falle kann der Schätzwert $\hat{s}$ beispielsweise nach der 2D-Schätzgleichung

$$\hat{s} = \alpha \cdot s_A + \beta \cdot s_B + \gamma \cdot s_C + \delta \cdot s_D \qquad (1)$$

ermittelt werden, im letzteren Fall zum Beispiel nach der 3D-Schätzgleichung

$$\hat{s} = s_{X'} \qquad (2)$$

wobei mit $s_A$ das rekonstruierte Bildpunktsignal des Bildpunktes A bezeichnet ist, mit $s_B$ das des Bildpunktes B usw. und wobei die Koeffizienten $\alpha$, $\beta$, $\gamma$ und $\delta$ Bewertungsfaktoren darstellen, die den einzelnen Bildpunktsignalen zugeordnet sind. Die Schätzgleichung (2) ist dann zu empfehlen, wenn der auch als "Aktivität" bezeichnete Kontrast des aktuellen Bildpunkts X zu den ihn umgebenden Bildpunkten gering ist.

Der Erfindung liegt die Aufgabe zugrunde, eine Anordnung der eingangs genannten Art anzugeben, bei der eine schnelle Signalverarbeitung gewährleistet ist. Das wird erfindungsgemäß durch eine Ausbildung der Anordnung nach dem kennzeichnenden Teil des Patentanspruchs 1 erreicht.

Der mit der Erfindung erzielbare Vorteil liegt insbesondere in den reduzierten Arbeitszeiten der im rekursiven Signalpfad liegenden Funktionseinheiten, die für die Bildung und Subtraktion des Schätzwertes $\hat{s}$ vom aktuellen Bildpunktsignal s erforderlich sind. Die erfindungsgemäße Anordnung eignet sich sowohl zum Einsatz in 2D- als auch in 3D-DPCM-Codierungsverfahren. Sie läßt sich in relativ einfacher Weise in integrierter Schaltkreistechnik auf einem Halbleiterkörper realisieren.

Die Patentansprüche 2 bis 7 sind auf bevorzugte Ausgestaltungen und Weiterbildungen der Erfindung gerichtet.

Die Erfindung wird nachfolgend anhand von in der Zeichnung dargestellten, bevorzugten Ausführungsbeispielen näher erläutert. Dabei zeigt:

Fig. 1 das Prinzipschaltbild einer bekannten Anordnung zur DPCM-Codierung,

Fig. 2 eine Darstellung von einzelnen Bildpunkten zweier aufeinanderfolgender Fernsehbilder zur Erläuterung von Fig. 1,

Fig. 3 ein erstes Ausführungsbeispiel der Erfindung,

Fig. 4 eine Weiterbildung der Anordnung nach Fig. 3 und

Fig. 5 ein zweites Ausführungsbeispiel der Erfindung.

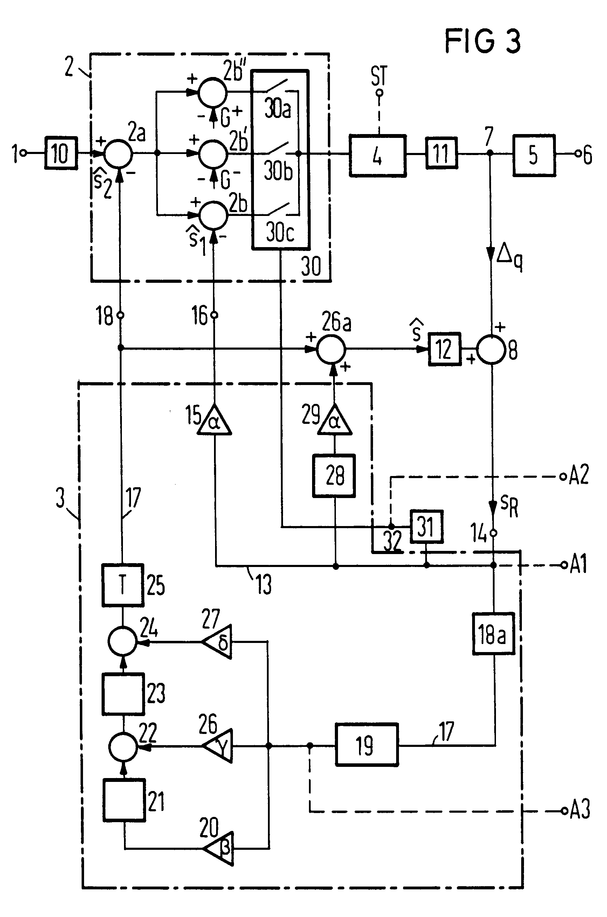

Fig. 3 zeigt eine Anordnung nach der Erfindung, die von dem in Fig. 1 dargestellten Grundaufbau eines DPCM-Coders ausgeht. Zusätzlich zu den bereits anhand von Fig. 1 erläuterten, mit den gleichen Bezugszeichen versehenen Funktionseinheiten sind mit Taktimpulsspannungen beaufschlagte Register 10, 11 und 12 vorgesehen, von denen das Register 10 in Serie zum Eingang 1 liegt, das Register 11 zwischen den Schaltungsteilen 4 und 7 und das Register 12 vor dem zweiten Eingang des Addierers 8. Zu Beginn einer Taktimpulsperiode i seien im Register 10 ein aktuelles Bildpunktsignal s gespeichert, das z.B. dem Bildpunkt X entspricht, im Register 11 ein quantisiertes Differenzsignal $\Delta_q$, das vom Bildpunktsignal s der Periode i - 1 und damit vom Bildpunkt A abgeleitet ist, und im Register 12 ein Schätzwert $\hat{s}$, der aus den Bildpunktsignalen einiger zeitlich davor liegender Taktimpulsperioden gebildet ist. Dabei besteht die Zeitbedingung, daß während der Taktimpulsperiode i im Addierer 8 ein rekonstruiertes Bildpunktsignal $s_R$ gebildet werden muß, im Prädiktor 3 ein neuer Schätzwert $\hat{s}$ zu ermitteln ist, im Subtrahierer 2 ein Differenzsignal $\Delta = s - \hat{s}$ zu bilden ist und im Quantisierer 4 ein quantisiertes Signal $\Delta_q$ abzuleiten ist, so daß bis zum Beginn der nächstfolgenden Taktimpulsperiode i + 1 das letztgenannte Signal bereits im Register 11 gespeichert worden ist. In der Taktimpulsperiode i + 1 wiederholt sich dann der Vorgang, wobei im Register 10 bereits das nächstfolgende Bildpunktsignal gespeichert ist. Es besteht also ein zeitkritischer Signalpfad, der vom Ausgang des Registers 11 über 7, 8, 3, 2 und 4 zum Eingang von 11 verläuft. Die Signalverarbeitung innerhalb dieses zeitkritischen Pfades muß innerhalb einer Taktimpulsperiode erfolgen.

Da der Prädiktor 3 in Fig. 3 nach einer 2D-Schätzgleichung entsprechend Beziehung (1) arbeitet, weist er einen ersten Schaltungszweig 13 auf, der vom Eingang 14 über einen ersten Bewerter 15, der eine Signalbewertung mit einem Bewertungsfaktor durchführt, zu einem ersten Ausgang 16 verläuft. An diesem ist ein erster, mit Hilfe des Bildpunktes A gewonnener Signalanteil $\hat{s}_1$ des Schätzwertes $\hat{s}$ abgreifbar. Ein zweiter Schaltungszweig 17 verläuft von 14 zu einem zweiten Ausgang 18 des Prädiktors und dient zur Ableitung eines zweiten, mit Hilfe der Bildpunkte B, C und D gewonnenen Signalanteils $\hat{s}_2$. Der Signalanteil $\hat{s}_2$ setzt sich dabei aus mehreren Komponenten zusammen, von denen die erste über einen Bewerter 18a, ein Verzögerungsglied 19, einen Bewerter 20, der eine Bewertung nach dem Faktor $\beta$ durchführt, und eine Kettenschaltung eines Verzögerungsgliedes 21, eines Addierers 22, eines Verzögerungsgliedes 23, eines Addierers 24 und eines Verzögerungsgliedes 25 abgeleitet wird. Nimmt man an, daß das Verzögerungsglied 19 eine Verzögerung hervorruft, die dem Ausdruck (z-2) . T entspricht, wobei z die Anzahl der Bildpunkte pro Fernsehzeile angibt und T eine Taktimpulsperiodendauer bedeutet, und geht man weiter davon aus, daß die vorzugsweise als getaktete Register ausgebildeten Verzögerungsglieder 21, 23 und 25 jeweils um eine Taktimpulsperiodendauer T verzögern, so erkennt man, daß sich die erste Komponente von $\hat{s}_2$ aus dem Bildpunkt B ableitet. Eine zweite Komponente, die über einen mit dem Faktor $\gamma$ bewertenden Bewerter 26 vom Ausgang des Verzögerungsgliedes 19 abgegriffen und einem Eingang des Addierers 22 zugeführt wird, drückt die Abhängigkeit des Signalanteils $\hat{s}_2$ vom Bildpunkt C aus, während eine dritte, über einen Bewerter 27 (Faktor $\delta$) vom Ausgang von 19 abgeleitete Komponente den Einfluß des Bildpunktes D ausdrückt. Der Schätzwert $\hat{s}$ setzt sich dann aus beiden Signalanteilen $\hat{s}_1$ und $\hat{s}_2$ additiv zusammen.

Die Aufteilung des Schätzwertes $\hat{s}$ in die beiden Signalanteile $\hat{s}_1$ und $\hat{s}_2$ macht eine entsprechende Aufteilung des Subtrahierers 2 von Fig. 1 in zwei zueinander in Kette geschaltete Subtrahierer 2a und 2b erforderlich, wobei in 2a der Signalanteil $\hat{s}_2$ von dem im Register 10 gespeicherten Bildpunktsignal s abgezogen wird und der Signalanteil $\hat{s}_1$ seinerseits in 2b von der so gebildeten Differenz abgezogen wird. Aus den Signalanteilen $\hat{s}_2$ und $\hat{s}_1$ wird andererseits in einem Addierer 26a der Schätzwert $\hat{s}$ ermittelt, wobei $\hat{s}_1$ für diese Addition eigens über einen mit dem Eingang 14 verbundenen Begrenzer 28 und einen dem Bewerter 15 nachgebildeten Bewerter 29 abgeleitet wird. Der Ausgang des Addierers 26a ist mit dem Eingang des Registers 12 verbunden.

Neben dem Subtrahierer 2b sind in Fig. 3 zwei weitere Subtrahierer 2b' und 2b'' vorgesehen, wobei die ersten Eingänge von 2b, 2b' und 2b'' zueinander parallel geschaltet sind. Während jedoch der zweite Eingang von 2b mit dem Signalanteil $\hat{s}_1$ belegt ist, wird dem zweiten Eingang von 2b' ein negativer Begrenzungswert $G^-$ zugeführt, der dem negativen Begrenzungswert der Begrenzereinrichtung 9 von Fig. 1, multipliziert mit $\alpha$, entspricht. Der zweite Eingang von 2b" ist mit einem posistiven Begrenzungswert $G^+$ beaufschlagt, der dem positiven Begrenzungswert der Einrichtung 9, multipliziert mit $\alpha$, entspricht. Die Ausgänge der Subtrahierer 2b, 2b' und 2b" sind an die Eingänge eines Multiplexers 30 gelegt, dessen Ausgang mit dem Eingang des Quantisierers 4 verbunden ist. Eine Überlauferkennungseinrichtung 31, die mit dem Ausgang des Addierers 8 verbunden ist, steuert über ihren Ausgang 32 den Multiplexer 30. Dabei wird für den Fall, daß die im Addierer 8 gebildete Summe den vorgegebenen, positiven Grenzwert $G^+$ übersteigt, vom Ausgang 32 ein Steuersignal abgegeben, das den Schalter 30a schließt und den Ausgang des Subtrahierers 2b" mit dem Eingang des Quantisierers 4 verbindet. Unterschreitet die im Addierer 8 gebildete Summe den vorgegebenen negativen Grenzwert $G^-$, so wird der Schalter 30b des Multiplexers geschlossen und der Ausgang von 2b' mit dem Eingang von 4 verbunden. Schließlich wird für den Fall, daß die in 8 gebildete Summe sich innerhalb des durch $G^+$ und $G^-$ bestimmten Wertebereiches befindet, der Schalter 30c geschlossen, so daß die in 2b gebildete Differenz an den Eingang von 4 gelangt.

Da der Bewerter 15 in Serie zu dem zweiten Eingang des digitalen Subtrahierers 2b angeordnet ist, kann eine Bewertung mit einem Faktor $\alpha$, der durch eine Zahl $2^n$ ($n$ = 1, 2 usw. oder -1, -2 usw.) ausgedrückt wird, in einfacher Weise dadurch realisiert werden, daß das zu bewertende Signal, in diesem Fall das rekonstruierte Bildpunktsignal $s_R$, welches z. B. aus acht Bits besteht, nicht den Eingängen der ihm stellenmäßig entsprechenden Stufen des Subtrahierers 2b zugeführt wird, sondern den um eine entsprechende Stellenzahl in Richtung auf höherwertige oder niedrigerwertige Bits versetzten Stufeneingängen. Entsprechendes gilt auch für die Bewerter 20, 26, 27 und 29, deren Funktionen ebenfalls durch eine versetzte Zuordnung der einzelnen Bits der zu bewertenden digitalen Signale zu den Eingängen des als Register ausgebildeten Verzögerungsgliedes 21 oder den Stufeneingängen der Addierer 22, 24 und 26 realisiert werden können.

Der Ausgang des Addierers 8 ist direkt mit dem Eingang des Subtrahierers 2b verbunden. Die in 8 gebildete Summe kann daher bitweise, und zwar beginnend mit der Stufe niedrigster Wertigkeit, entsprechend dem Übertragsdurchlauf an die einzelnen Stufeneingänge des Subtrahierers 2b angelegt werden. Die Subtraktion läuft also nahezu parallel zur Addition ab und ist nur um die Signallaufzeit vom Eingang bis zum Summenausgang der Stufe der niedrigsten Wertigkeit des Addierers 8 verzögert. Die Funktion der Begrenzereinrichtung 9 in Fig. 1 wird nun dadurch realisiert, daß in 2b, 2b' und 2b" unabhängig voneinander drei Differenzbeträge gebildet werden, von denen jeweils nur einer an den Quantisierer 4 durchgeschaltet wird. Die Entscheidung, welche der drei Differenzen weiterverarbeitet wird, trifft die Überlauferkennungseinrichtung 31. In entsprechender Weise wird die im Subtrahierer 2a gebildete Differenz den ersten Eingängen der Subtrahierer 2b, 2b' und 2b" bitweise, und zwar beginnend mit der Stufe niedrigster Wertigkeit, zugeführt, so daß auch die in 2a und 2b durchgeführten Subtraktionen nahezu gleichzeitig erfolgen.

Durch die nach der Erfindung realisierte Begrenzerfunktion wird die Signalverarbeitung im genannten rekursiven Signalpfad gegenüber der Signalverarbeitung nach Fig. 1 wesentlich beschleunigt, da dort erst nach Ablauf der vollen Arbeitszeit des Addierers 8 eine Begrenzung des Summensignals in der Einrichtung 9 erfolgen kann und der Subtrahierer 2 erst im Anschluß hieran die Differenz zwischen dem Bildpunktsignal $s$ und dem gegebenenfalls begrenzten Summensignal des Addierers 8 ermittelt.

Der Begrenzer 28 läßt zwar keine fast gleichzeitige Summenbildung in den Addierern 8 und 26 zu, doch liegt er in einem vom Ausgang des Registers 12 über 8, 28, 29 und 26a zum Eingang von 12 verlaufenden Signalpfad, der nicht zeitkritisch ist, da in ihm keine Signalquantisierung vorgenommen wird.

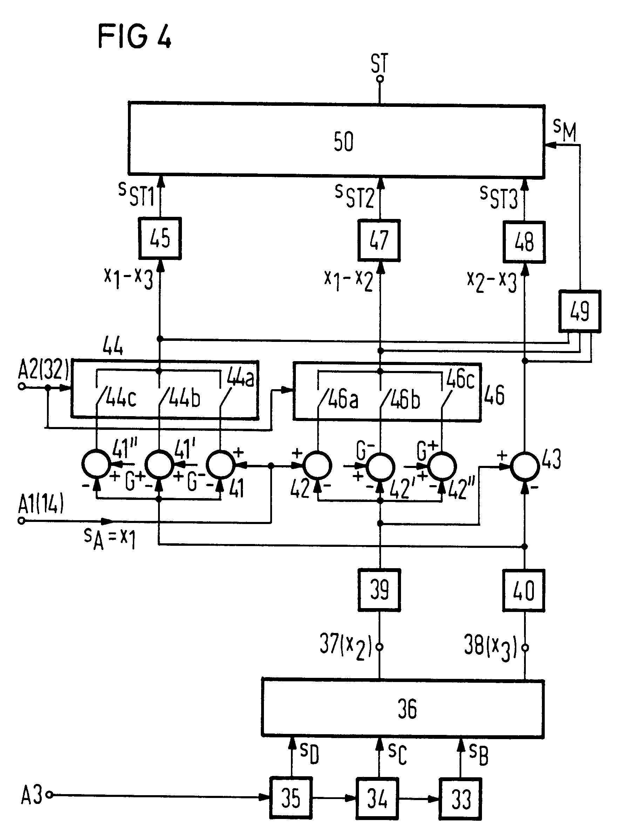

Fig. 4 zeigt eine Teilschaltung, die die Anordnung nach Fig. 3 zu einem DPCM-Coder mit adaptiver Quantisierung ergänzt. Dabei wird davon ausgegangen, daß der Quantisierer 4 auf eine von mehreren Quantisierungskennlinien umschaltbar ist, die sich insbesondere dadurch unterscheiden, daß jeweils unterschiedlich große Quantisierungsschritte verwendet werden. Ist der Kontrast eines zu codierenden Bildpunktes, z.B. X, zu den ihn umgebenden Bildpunkten nur gering, so erfolgt die Quantisierung in kleinen Stufen, während bei größeren Kontrastwerten auf Quantisierungskennlinien mit jeweils größeren Quantisierungsstufen umgeschaltet wird. Der Quantisierer 4 ist mit einem Steuereingang ST versehen, dem Steuersignale zugeführt werden, die eine Umschaltung auf eine jeweils ausgewählte Quantisierungskennlinie bewirken. Die in Figur 4 dargestellte Teilschaltung stellt dabei eine Steuerschaltung dar, über die ein dem Eingang ST zugeführtes Steuersignal abgeleitet wird.

Die Steuerschaltung nach Fig. 4 weist drei Eingänge auf, die jeweils mit den Ausgängen A1, A2 und A3 der Anordnung nach Fig. 3 verbunden sind und daher die gleichen Bezugszeichen tragen. Der Eingang A1 entspricht dem Schaltungspunkt 14 von Fig. 3, der Eingang A2 dem Ausgang 32 der Überlauferkennungseinrichtung 31 und der Eingang A3 dem Ausgang des Verzögerungsgliedes 19. Über A3 werden die von den Bildpunkten B, C und D abgeleiteten, rekonstruierten Bildpunktsignale $s_B$, $s_C$ und $s_D$ nacheinander drei in Serie zueinander liegenden Registern 33 bis 35 zugeführt und in diesen gespeichert. Diese Bildpunktsignale werden zunächst in einer Vergleichseinrichtung 36 derart miteinander verglichen, daß an einem ersten Ausgang 37 von 36 das größte dieser drei Bildpunktsignale erscheint, das mit $x_2$ bezeichnet wird, und an einem zweiten Ausgang 38 von 36 das kleinste dieser drei Signale, das mit $x_3$ bezeichnet wird. In nachgeschalteten Registern 39 und 40 werden die Signale $x_2$ und $x_3$ gespeichert. Über den Eingang A1 wird das vom Bildpunkt A abgeleitete, rekonstruierte Bildpunktsignal $s_A$ zugeführt, das im folgenden mit $x_1$ bezeichnet wird. Man bildet nun die Differenzsignale $x_1 - x_3$, $x_1 - x_2$ und $x_2 - x_3$. Dazu sind drei Subtrahierer 41, 42 und 43 vorgesehen, wobei die ersten Eingänge von 41 und 42 mit dem Eingang A1 verbunden sind und die zweiten Eingänge dieser Subtrahierer jeweils an den Ausgängen der Register 40 und 39 liegen. Der erste Eingang des Subtrahierers 43 ist mit dem Ausgang des Registers 39 beschaltet, der zweite Eingang von 43 mit dem Ausgang des Registers 40. Der Ausgang von 41 ist über einen Multiplexer 44 an den Eingang einer Logikschaltung 45 geführt, die das Differenzsignal $x_1 - x_3$ in eine von mehreren Amplitudenklassen einordnet und in Abhängigkeit von der Klasse, in die das Differenzsignal eingeordnet wurde, ein klassenspezifisches Steuersignal $s_{ST1}$ abgibt. Nimmt man an, daß z.B. drei verschiedene Grenzwerte GW1 bis GW3 definiert sind, die vier verschiedene Amplitudenklassen begrenzen, so wird für den Fall, daß $x_1 - x_3$ unterhalb von GW1 liegt, ein erstes Steuersignal $s_{ST1}$ abgegeben, das eine erste Quantisierungskennlinie des Quantisierers 4 auswählt. Liegt $x_1 - x_3$ zwischen GW1 und GW2, so ergibt sich ein zweites Steuersignal $s_{ST1}$, das eine zweite Quantisierungskennlinie auswählt. Gehört $x_1 - x_3$ einer Klasse an, deren Grenzen durch GW2 und GW3 gegeben sind, so wird eine dritte Quantisierungskennlinie ausgewählt, während die Zugehörigkeit des Differenzsignals zu der oberhalb von GW3 liegenden, vierten Klasse eine Auswahl der vierten Quantisierungskennlinie bedingt.

In analoger Weise wird das im Subtrahierer 42 gebildete Differenzsignal $x_1 - x_2$ über einen Multiplexer 46 dem Eingang einer Logikschaltung 47 zugeführt, die je nach Zugehörigkeit dieses Differenzsignals zu einer der vorstehend genannten Amplitudenklassen ein klassenspezifisches Steuersignal $s_{ST2}$ abgibt. Weiterhin gelangt das Differenzsignal $x_2 - x_3$ an den Eingang einer Logikschaltung 48, in der ein klassenspezifisches Steuersignal $s_{ST3}$ in der bereits beschriebenen Weise erzeugt wird. Eine Auswahlsteuerung 49 leitet aus den Vorzeichenbits der Differenzsignale $x_1 - x_3$, $x_1 - x_2$ und $x_2 - x_3$ ein Steuersignal $s_M$ ab, das angibt, welches dieser Differenzsignale das größte ist. $s_M$ wird sodann einem Multiplexer 50 zugeführt, der in Abhängigkeit von $s_M$ nur eines der Steuersignale $s_{ST1}$, $s_{ST2}$ oder $s_{ST3}$ an den Eingang ST des Quantisierers 4 durchschaltet, und zwar dasjenige, das von dem größten der drei zuletzt genannten Differenzsignale abgeleitet worden ist.

Mit einer solchen Steuerschaltung, die prinzipiell bereits aus der DE-OS 33 31 426 bekannt ist, wird in Abhängigkeit von dem maximalen Kontrast, der zwischen jeweils zwei Bildpunkten innerhalb der Bildpunktgruppe A, B, C und D auftritt, eine diesem maximalen Kontrast zugeordnete Quantisierungskennlinie des Quantisierers 4 ausgewählt. Der Aufbau und die Funktionsweise der Vergleichseinrichtung 36, der Logikschaltungen 45, 47 und 48 und der Auswahlsteuerung 49 sind der DE-OS 33 31 426 zu entnehmen.

Die Begrenzungsfunktion, die innerhalb des zeitkritischen Pfades 7, 8, 15, 2, 4 und 11 (Fig. 3) durch die parallel zu 2b arbeitenden Subtrahierer 2b′ und 2b″, den Multiplexer 30 und die Überlauferkennungseinrichtung 31 realisiert wird, ist in der Steuerschaltung nach Fig. 4 dadurch realisiert, daß neben dem Subtrahierer 41 zwei weitere Subtrahierer 41′ und 41″ vorgesehen sind, wobei die zweiten Eingänge aller dieser Subtrahierer zueinander parallel geschaltet sind. Der erste Eingang von 41′ ist mit dem negativen Begrenzungswert $G^-$ beschaltet, der erste Eingang von 41″ mit dem positiven Begrenzungswert $G^+$. Die Ausgänge von 41, 41′ und 41″ sind an zugeordnete Eingänge des Multiplexers 44 gelegt, der über Schalter 44a bis 44c nur einen der Subtrahiererausgänge an den Eingang der Logikschaltung 45 durchschaltet. In analoger Weise sind dem Subtrahierer 42 zwei weitere Subtrahierer 42′ und 42″ zugeordnet, wobei jeweils einer der Ausgänge der Substrahierer 42, 42′ oder 42″ über einen der Schalter 46a bis 46c des Multiplexers 46 an den Eingang der Logikschaltung 47 durchgeschaltet wird. Die Steuerung der Schalter 44a bis 44c und 46a bis 46c erfolgt in Abhängigkeit von dem Ausgangssignal der Überlauferkennungseinrichtung 31, das über den Eingang A2 zugeführt wird. Bleibt $s_A$ innerhalb des durch $G^+$ und $G^-$ bestimmten Wertebereichs, so werden die Schalter 44a und 46a geschlossen. Überschreitet dagegen das Bildpunktsignal $s_A$ den positiven Grenzwert $G^+$, so schließen die Schalter 44c und 46c, und unterschreitet $s_A$ den negativen Grenzwert -G, so werden 44b und 46b geschlossen. Trotz aufrechterhaltener Begrenzungsfunktion innerhalb des rekursiven Schaltungszweiges 7, 8, A1, 41 (42), 44 (46) 45 (47), 50, 4 und 11 wird hierdurch eine schnelle Steuerung des Quantisierers 4 erreicht, da eine nahezu gleichzeitige Addition im Addierer 8 und Subtraktion in den Subtrahierern 41, 41′, 41″ und 42, 42′ und 42″ erfolgt.

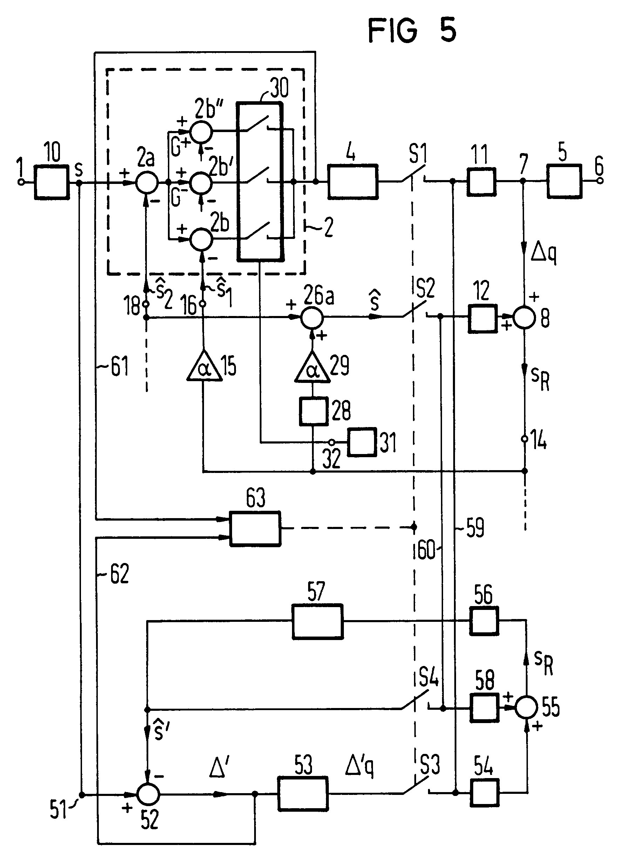

Fig. 5 zeigt einen nach der Erfindung ausgebildeten, adaptiven 3D-DPCM-Coder, bei dem die Prädiktion des Schätzwertes in der Weise vorgenommen wird, daß in Abhängigkeit von den jeweils zu übertragenden Bildpunktsignalen eine Umschaltung von einer 2D-Schätzgleichung, z.B. (1), auf eine 3D-Schätzgleichung, z.B. (2), oder umgekehrt erfolgt. Die 2D-Schätzgleichung (1) wird bei einem hinreichend großen Kontrast innerhalb der Bildpunktgruppe A bis D verwendet, die Schätzgleichung (2) bei zu niedrigen Kontrastwerten. Es sind zwei getrennte DPCM-Schleifen vorgesehen, von denen die erste nach der 2D-Schätzgleichung (1) arbeitet, entsprechend Fig. 3 aufgebaut ist und mit den dort bereits verwendeten Bezugszeichen versehen ist. Der Teil dieser Schleife, der den Signalanteil $\hat{s}_2$ berücksichtigt, wurde lediglich aus Gründen der Übersichtlichkeit weggelassen. Zum Unterschied von Fig. 3 ist zwischen den Ausgang des Quantisierers 4 und den Eingang des Registers 11 ein Schalter S1 eingefügt und zwischen dem Ausgang des Addierers 26 und dem Eingang des Registers 12 ein Schalter S2 angeordnet. Vom Ausgang des Registers 10 gelangt man zum Eingang 51 einer zweiten, nach der 3D-Schätzgleichung (2) arbeitenden Schleife. Diese weist einen Subtrahierer 52 auf, dessen erster Eingang mit 51 verbunden ist und dessen Ausgang an den Eingang eines Quantisierers 53 geführt ist, dessen Ausgang über einen Schalter S3 mit dem Eingang eines Registers 54 verbunden ist. Der Ausgang von 54 liegt am ersten Eingang eines Addierers 55, dessen Ausgang mit dem Eingang eines Begrenzers 56 beschaltet ist. Vom Ausgang des letzteren gelangt man zum Eingang eines Prädiktors 57, dessen Ausgang mit dem zweiten Eingang des Subtrahierers 52 und über einen Schalter S4 mit dem Eingang eines weiteren Registers 58 verbunden ist, dessen Ausgang mit dem zweiten Eingang des Addierers 55 beschaltet ist. Der Prädiktor 57 liefert einen Schätzwert $\hat{s}'$, der gemäß der Beziehung (2) dem rekonstruierten Signal $s_X'$ entspricht, das vom Bildpunkt X′ des vorhergehenden Fernsehbildes m-1 abgeleitet worden ist. Da der Prädiktor 57 im einzelnen nicht dargestellte Verzögerungsglieder enthält, die die Bildung von $\hat{s}'$ etwa um eine Bilddauer verzögern, ist in der 3D-Schleife 51 bis 58 kein zeitkritischer Pfad vorhanden, der eine Datenverarbeitungsgeschwindigkeit erfordern würde, wie sie für die 2D-Schleife 11, 7, 8, 15, 2 und 4 verlangt werden muß. Die Eingänge der Register 11 und 54 sind über eine Leitung 59 zueinander parallel geschaltet, die Eingänge der Register 12 und 58 über eine Leitung 60.

Zur Erklärung der Wirkungsweise der Anordnung nach Fig. 5 wird davon ausgegangen, daß die Schalter S1 und S2 geschlossen und die Schalter S3 und S4 zunächst geöffnet sind. Dabei arbeitet die 2D-Schleife wie bereits anhand von Fig. 3 beschrieben, während die 3D-Schleife über das Register 54 den quantisierten Schätzfehler $\Delta_q$ der 2D-Schleife und über das Register 58 den Schätzwert $\hat{s}$ der 2D-Schleife zugeführt erhält und hieraus mit Hilfe des Prädiktors 57 einen Schätzwert $\hat{s}'$ bildet. Im Subtrahierer 52 wird $\hat{s}'$ von einem eingangsseitigen Bildpunktsignal s subtrahiert, so daß ein 3D-Schätzfehler $\Delta'$ gebildet wird. Über zwei Leitungen 61 und 62 werden nun die Schätzfehler $\Delta$ und $\Delta'$ den Eingängen einer Prädiktorsteuerung 63 zugeführt, über deren Ausgang die Schalter S1 bis S4 angesteuert werden. In der Prädiktorsteuerung 63 wird dazu festgestellt, welches der beiden Signale $\Delta$ oder $\Delta'$ kleiner ist als das andere. Ist $\Delta$ kleiner, d.h. liefert die 2D-Schleife den besseren Schätzwert, so bleiben die Schalter S1 und S2 geschlossen, wobei der in 4 quantisierte Schätzfehler $\Delta_q$ im Codierer 5 codiert und sodann über den Ausgang 6 auf die Übertragungsstrecke gegeben wird. Liefert jedoch die 3D-Schleife den kleineren Schätzfehler $\Delta'$, so werden die Schalter S1 und S2 geöffnet und stattdessen die Schalter S3 und S4 geschlossen. Dabei gelangt dann der quantisierte Schätzfehler $\Delta_q'$ nach dem Durchlaufen des Registers 11 und des Codierers 5 über den Ausgang 6 auf die Übertragungsstrecke und außerdem über die Register 11 und 12 in die obere 2D-Schleife, die hieraus mit Hilfe des in ihr enthaltenen Prädiktors den nächsten Schätzwert $\hat{s}$ bildet. Wird jedoch beim nächsten anliegenden Bildpunktsignal s festgestellt, daß der Schätzfehler $\Delta$ wieder kleiner ist als $\Delta'$, so erfolgt eine neuerliche Umschaltung auf die 2D-Schleife, was durch Schließen der Schalter S1 und S2 und Öffnen der Schalter S3 und S4 bewirkt wird.

Der 3D-DPCM-Coder nach Fig. 5 arbeitet wegen der durch den Prädiktor 57 zeitunkritischen 3D-Schleife 51 bis 58 mit einer Geschwindigkeit, die dem 2D-Coder nach Fig. 3 voll entspricht.

Weitere Ausführungsformen der Erfindung unterscheiden sich von den oben beschriebenen dadurch, daß die Begrenzungswerte $G^+$ und $G^-$ des ersten Addierers 8, die den von 8 abgegebenen Wertebereich zwischen sich begrenzen, gleiche Vorzeichen aufweisen. Beispielsweise können $G^+$ und $G^-$ jeweils positive Begrenzungswerte darstellen. Daher ist ganz allgemein $G^+$ als ein oberer Begrenzungswert und $G^-$ als ein unterer Begrenzungswert zu bezeichnen.

**Patentansprüche**

1. Anordnung zur DPCM-Codierung von Fernsehsignalen, bei der von digitalisierten Bildpunktsi-gnalen (s) jeweils Schätzwerte (ŝ) subtrahiert und die erhaltenen Differenzsignale nach einer Quantisierung und Codierung zur Signalübertragung herangezogen werden, mit einem rekursiven Signalpfad, der einen ersten Addierer (8) zur Bildung von rekonstruierten Bildpunktsignalen (s_R) aus den quantisierten Differenzsignalen und den Schäzwerten, eine Begrenzereinrichtung, einen Prädiktor (3) zur Bildung der Schätzwerte (ŝ) und eine Subtraktionsvorrich-tung (2) zur Bildung der Differenzsignale aufweist, **dadurch gekennzeinet,** daß die Subtraktionsvorrichtung (2) drei Subtrahierer (2b, 2b′, 2b″) enthält, deren parallel geschaltete erste Eingänge mit den Bildpunktsignalen oder von diesen über einen vorgeschalteten Subtrahierer (2a) abgeleiteten Signalen beschaltet sind, daß der zweite Eingang des ersten Subtrahierers (2a) der Subtraktionsvorrichtung (2) mit dem Ausgang des ersten Addierers (8) verbunden ist, daß die zweiten Eingänge der beiden anderen Subtrahierer (2b′, 2b″) der Subtraktionsvorrichtung (2) jeweils mit einem unteren Grenzwert (G⁻) und einem oberen Grenzwert (G⁺) des ersten Addierers (8) beaufschlagt sind und daß die Ausgänge der genannten drei Subtrahierer über einen Multiplexer (30) mit dem Eingang eines die Quantisie-rung durchführenden Quantisierers (4) verbun-den sind, wobei ein Steuereingang des Multiplexers mit einer vom Ausgang des ersten Addierers (8) gesteuerten Überlauferkennungseinrichtung (31) beschaltet ist.

2. Anordnung nach Anspruch 1, **dadurch ge-kennzeichnet,** daß der vorgeschaltete Subtra-hierer (2a) über seinen ersten Eingang mit den digitalisierten Bildpunktsignalen (s) beschaltet ist, daß der zweite Eingang desselben über eine Serienschaltung aus mehreren Verzögerungsgliedern (19, 21, 23, 25), weiteren Addierern (22, 24) und einen ersten Begrenzer (18a) mit dem Ausgang des ersten Addierers (8) verbunden sind, daß die weiteren Addierer (22, 24) jeweils über einen ihrer Eingänge mit am Ausgang eines dieser Verzögerungsglieder (19) abgreifbaren, zeitverzögerten Bildpunktsignalen beaufschlagt sind und daß der zweite Eingang des vorgeschalteten Subtrahierers (2a) mit dem ersten Eingang eines ersten zusätzlichen Addierers (26a) beschaltet ist, dessen zweiter Eingang über einen zweiten Begrenzer (28) mit dem Ausgang des ersten Addierers (8) verbunden ist und dessen Ausgang mit dem zweiten Eingang des ersten Addierers (8) beschaltet ist.

3. Anordnung nach Anspruch 2, **dadurch gekennzeichnet,** daß der Quantisierer (4) auf unterschiedliche Quantisierungskennlinien umschaltbar ausgebildet ist, daß von einem der Verzögerungsglieder (19) drei rekonstruierte Bildpunktsignale (s_B, s_C und s_D) ableitbar sind, daß eine Vergleichseinrichtung (36) vorgesehen ist, in der das größte dieser drei Bild-punktsignale (x_2) und das kleinste derselben (x_3) selektiert werden, daß ein rekonstruiertes, aktuelles Bildpunktsignal (x_1) am Ausgang des ersten Addierers (8) abgegriffen wird, daß die Differenzbeträge aus dem aktuellen Bildpunktsignal und dem genannten größten Bildpunkt-signal (x_1-x_2), aus dem aktuellen Bildpunktsi-gnal und dem genannten kleinsten Bildpunktsi-gnal (x_1-x_3) und aus dem genannten größten und dem genannten kleinsten Bildpunktsignal (x_2-x_3) ermittelt werden, daß für jeden dieser Differenzbeträge eine Logikschaltung (45, 47, 48) vorgesehen ist, in der die Zuordnung zu einer Mehrzahl von Grenzwerten und den hierdurch definierten Amplitudenklassen ermittelt und ein dieser Zuordnung entsprechendes klassenspezifisches Steuersignal (s_{ST1}, s_{ST2}, s_{ST3}) gebildet wird, daß dasjenige der klassenspezifischen Steuersignale, das zu dem größ-ten der drei Differenzbeträge (x_1-x_2, x_1-x_3, x_2-x_3) gehört, über einen zweiten Multiplexer (50) einen Steuereingang des Quantisierers (4) beaufschlagt, so daß eine diesem klassenspezifi-schen Steuersignal zugeordnete Quantisie-rungskennlinie ausgewählt wird, daß neben dem den Differenzbetrag aus dem aktuellen Bildpunktsignal (x_1) und dem kleinsten der ge-nannten Bildpunktsignale (x_3) bildenden Sub-trahierer (41) noch zwei weitere Subtrahierer (41′, 41″) vorgesehen sind, wobei in diesen weiteren Subtrahierern jeweils die Differenz zwischen dem oberen bzw. unteren Grenzwert (G⁺, G⁻) des ersten Addierers (8) und dem kleinsten der genannten Bildpunktsignale (x_3) gebildet wird, daß ein von der Überlauferken-nungseinrichtung (31) gesteuerter dritter Multi-plexer (44) vorgesehen ist, der lediglich eines der in den drei zuletzt genannten Subtrahierern gebildeten Ergebnisse als den Differenzbetrag zwischen dem aktuellen Bildpunktsignal und dem genannten kleinsten Bildpunktsignal (x_1-x_3) an die nachgeordnete Logikschaltung (45) weitergibt, daß neben dem den Differenzbetrag aus dem aktuellen Bildpunktsignal und dem größten der genannten Bildpunktsignale (x_1-x_2) bildenden Subtrahierer (42) noch zwei weitere Subtrahierer (42′, 42″) vorgesehen sind, wobei in diesen letzteren jeweils die Differenz zwischen dem oberen bzw. unteren Grenzwert ($G^+$, $G^-$) des ersten Addierers (8) und dem größten der genannten Bildpunktsignale ($x_2$) gebildet wird, und daß ein von der Überläuferkennungseinrichtung (31) gesteuerter vierter Multiplexer (46) vorgesehen ist, der lediglich eines der in den drei zuletzt genannten Subtrahierern gebildeten Ergebnisse als den Differenzbetrag zwischen dem aktuellen Bildpunktsignal und dem genannten größten Bildpunktsignal ($x_1$-$x_2$) an die nachgeordnete Logikschaltung (47) weitergibt.

4. Anordnung nach Anspruch 3, **dadurch gekennzeichnet,** daß der zweite Multiplexer (50) über eine Auswahlsteuerung (49) gesteuert wird, die mit den Vorzeichen der den Logikschaltungen (45, 47 und 48) zugeführten Differenzbeträge beaufschlagt ist.

5. Anordnung nach einem der vorhergehenden Ansprüche, **dadurch gekennzeichnet,** daß ein zweiter rekursiver Signalpfad vorgesehen ist, der einen zweiten zusätzlichen Subtrahierer (52), einen zweiten Quantisierer (53), einen zweiten zusätzlichen Addierer (55) und einen zweiten Prädiktor (57) enthält, welcher ein etwa um eine Bilddauer verzögerndes Verzögerungsglied aufweist, daß der erste Eingang des zusätzlichen Subtrahierers (52) mit den digitalisierten Bildpunktsignalen (s) beaufschlagt ist, daß der zweite Eingang dieses Subtrahierers (52) mit dem Ausgang des zweiten Prädiktors (57) verbunden ist, daß der Ausgang des zweiten Prädiktors (57) mit einem zweiten Eingang des zweiten zusätzlichen Addierers (55) beschaltet ist, daß die Eingänge des ersten und zweiten Quantisierers (4, 53) mit den Eingängen einer Prädiktorsteuerung (63) verbunden sind, über deren Ausgang zwei in Serie zu den Ausgängen des ersten und zweiten Quantisierers (4, 53) angeordnete Schalter (S1, S3) und zwei den die Schätzwerte liefernden Ausgängen des ersten und zweiten Prädiktors (3, 57) nachgeordnete Schalter (S2, S4) steuerbar sind, daß die Ausgänge des ersten und zweiten Quantisierers (4, 53) über die ihnen nachgeordneten Schalter (S1, S3) miteinander verbunden sind und daß die die Schätzwerte liefernden Ausgänge des ersten und zweiten Prädiktors (3, 53) über die ihnen nachgeordneten Schalter (S2, S4) miteinander verbunden sind.

6. Anordnung nach einem der vorhergehenden Ansprüche, **dadurch gekennzeichnet,** daß beiden Eingängen des ersten Addierers (8) jeweils ein mit einer Taktimpulsspannung beaufschlagtes Schieberegister (11, 12) vorgeschaltet ist.

7. Anordnung nach den Ansprüchen 5 und 6, **dadurch gekennzeichnet,** daß beiden Eingängen des zweiten zusätzlichen Addierers (55) zwei weitere mit Taktimpulsspannungen beaufschlagte Schieberegister (54, 58) vorgeschaltet sind.

## Claims

1. Arrangement for DPCM coding of television signals, in which arrangement in each instance estimated values ($\dot{s}$) are subtracted from digitized pixel signals (s) and, after quantization and coding, the difference signals obtained are utilized for signal transmission, having a recursive signal path which exhibits a first adder (8) for the formation of reconstructed pixel signals ($s_R$) from the quantized difference signals and the estimated values, a limiter device, a predictor (3) for the formation of the estimated values ($\dot{s}$) and a subtracter device (2) for the formation of the difference signals, characterized in that the subtracter device (2) includes three subtracters (2b, 2b', 2b''), the parallel-connected first inputs of which are connected to receive the pixel signals or signals derived from these via an upstream subtracter (2a), in that the second input of the first subtracter (2a) of the subtracter device (2) is connected to the output of the first adder (8), in that the second inputs of the other two subtracters (2b', 2b'') of the subtracter device (2) are acted upon in each instance by a lower limit value ($G^-$) and an upper limit value ($G^+$) of the first adder (8), and in that the outputs of said three subtracters are connected via a multiplexer (30) to the input of a quantizer (4) carrying out the quantization, a control input of the multiplexer being connected to an overflow recognition device (31) controlled by the output of the first adder (8).

2. Arrangement according to Claim 1, characterized in that the upstream subtracter (2a) is connected to receive the digitized pixel signals (s) via its first input, in that the second input of the same is connected via a series circuit comprising a plurality of delay elements (19, 21, 23, 25), further adders (22, 24) and a first limiter (18a), to the output of the first adder (8), in that the further adders (22, 24) are acted upon in each instance, via one of their inputs, by time-delayed pixel signals which can be picked off at the output of one of these delay elements (19), and in that the second input of the upstream subtracter (2a) is connected to the first input of a first additional adder (26a), the second input of which is connected via a second limiter (28) to the output of the first adder (8) and the output of which is connected to the second input of the first adder (8).

3. Arrangement according to Claim 2, characterized in that the quantizer (4) is designed to be capable of being switched to differing quantization characteristics, in that three reconstructed pixel signals ($s_B$, $s_C$ and $s_D$) are derivable from one of the delay elements (19), in that a comparator device (36) is provided, in which the greatest of these three pixel signals ($x_2$) and the smallest of the same ($x_3$) are selected, in that a reconstructed, current pixel signal ($x_1$) is picked off at the output of the first adder (8), in that the difference magnitudes derived from the current pixel signal and said greatest pixel signal ($x_1 - x_2$), derived from the current pixel signal and said smallest pixel signal ($x_1 - x_3$) and derived from said greatest and said smallest pixel signal ($x_2 - x_3$) are determined, in that for each one of these difference magnitudes a logic circuit (45, 47, 48) is provided in which the allocation to a plurality of limit values and to the hereby defined amplitude classes is determined and a class-specific control signal ($s_{ST1}$, $s_{ST2}$, $s_{ST3}$) corresponding to this allocation is formed, in that that one of the class-specific control signals which is associated with the greatest of the three difference magnitudes ($x_1$-$x_2$, $x_1$-$x_3$, $x_2$-$x_3$) acts upon a control input of the quantizer (4) via a second multiplexer (50), so that a quantization characteristic allocated to this class-specific control signal is selected, in that, in addition to the subtracter (41) forming the difference magnitude derived from the current pixel signal ($x_1$) and the smallest of said pixel signals ($x_3$), two further subtracters (41', 41'') are also provided, in these further subtracters in each instance the difference between the upper or lower limit value ($G^+$, $G^-$) of the first adder (8) and the smallest of said pixel signals ($x_3$) being formed, in that a third multiplexer (44) controlled by the overflow recognition device (31) is provided, which passes only one of the results, formed in the three last-mentioned subtracters as the difference magnitude between the current pixel signal and said smallest pixel signal ($x_1 - x_3$), to the downstream logic circuit (45), in that, in addition to the subtracter (42) forming the difference magnitude derived from the current pixel signal and the greatest of said pixel signals ($x_1 - x_2$), two further subtracters (41', 42'') are also provided, in these latter subtracters in each instance the difference between the upper or lower limit value ($G^+$, $G^-$) of the first adder (8) and the greatest of said pixel signals ($x_2$) being formed, and in that a fourth multiplexer (46) controlled by the overflow recognition device (31) is provided, which passes only one of the results formed in the three last-mentioned subtracters, as the difference magnitude between the current pixel signal and said greatest pixel signal ($x_1$-$x_2$), to the downstream logic circuit (47).

4. Arrangement according to Claim 3, characterized in that the second multiplexer (50) is controlled via a selection control device (49), which is acted upon by the signs of the difference magnitudes fed to the logic circuits (45, 47 and 48).

5. Arrangement according to one of the preceding claims, characterized in that a second recursive signal path is provided, which includes a second additional subtracter (52), a second quantizer (52), a second additional adder (55) and a second predictor (57), which exhibits a delay element delaying approximately by one frame period, in that the first input of the additional subtracter (52) is acted upon by the digitized pixel signals (s), in that the second input of this subtracter (52) is connected to the output of the second predictor (57), in that the output of the second predictor (57) is connected to a second input of the second additional adder (55), in that the inputs of the first and second quantizer (4, 53) are connected to the inputs of a predictor control device (63), via the output of which two switches ($S_1$, $S_3$) disposed in series with the outputs of the first and second quantizer (4, 53) and two switches (S2 and S4) disposed downstream of the outputs, delivering the estimated values, of the first and second predictor (3, 57) are controllable, in that the outputs of the first and second quantizer (4, 53) are connected to one another via the switches (S1, S3) disposed downstream of them, and in that the outputs, delivering the estimated values, of the first and second predictor (3, 53) are connected to one another via the switches (S2, S4) disposed downstream of them.

6. Arrangement according to one of the preceding claims, characterized in that a shift register (11, 12) acted upon by a clock pulse voltage is connected in each instance upstream of the two inputs of the first adder (8).

**7.** Arrangement according to Claims 5 and 6, characterized in that two further shift registers (54, 58) acted upon by clock pulse voltages are connected upstream of the two inputs of the second additional adder (55).

**Revendications**

**1.** Dispositif pour le codage MICD de signaux de télévision, dans lequel des valeurs estimées $(\hat{s})$ sont soustraites de signaux numériques (s) de points d'image, et dans lequel les signaux de différence obtenus sont utilisés, après une quantification et un codage, pour la transmission de signaux, et du type comportant une voie récursive des signaux, qui comporte un premier additionneur (8) servant à former des signaux reconstitués de points d'image ($s_R$) à partir des signaux de différence quantifiés et des valeurs estimées, un dispositif de limitation, un dispotif de prédiction (3) pour former les valeurs estimées $(\hat{s})$ et un dispositif de soustraction (2) pour former les signaux de différence, caractérisé en ce que le dispositif de soustraction (2) comporte trois soustracteurs (2b, 2b', 2b'') dont les premières entrées montées en parallèle sont chargées par les signaux de points d'image ou par des signaux dérivés de ces signaux de points d'image, par l'intermédiaire d'un soustracteur amont (2a), que la deuxième entrée du premier soustracteur (2a) du dispositif de soustraction (2) est reliée à la sortie du premier additionneur (8), que les deuxièmes entrées des deux autres soustracteurs (2b', 2b'') du dispositif de soustraction (2) sont respectivement chargées par une valeur limite inférieure ($G^-$) et une valeur limite supérieure ($G^+$) du premier additionneur (8), et que les sorties desdits trois soustracteurs sont reliées, par l'intermédiaire d'un multiplexeur (30), à l'entrée d'un quantificateur (4) effectuant la quantification, une entrée de commande du multiplexeur étant reliée à un dispositif (31) d'identification de dépassement de capacité, commandé par la sortie du premier additionneur (8).

**2.** Dispositif suivant la revendication 1, caractérisé en ce que le soustracteur amont (2a) est chargé, par l'intermédiaire de sa première entrée, avec les signaux numériques (s) des points d'image, que la deuxième entrée de ce soustracteur est reliée à la sortie du premier additionneur (8), par l'intermédiaire d'un circuit série constitué de plusieurs circuits à retard (19, 21, 23, 25), d'autres additionneurs (24, 22) et d'un premier limiteur (18a), que lesdits autres additionneurs (22, 24) sont chargés, par l'intermédiaire d'une de leurs entrées, par des signaux retardés de points d'image pouvant être prélevés à la sortie d'un de ces circuits à retard (19), et que la deuxième entrée du soustracteur amont (2a) est reliée à la première entrée d'un premier additionneur supplémentaire (26a) dont la deuxième entrée est reliée, par l'intermédiaire d'un deuxième limiteur (28), à la sortie du premier additionneur (8) et dont la sortie est reliée à la deuxième entrée du premier additionneur (8).

**3.** Dispotif suivant la revendication 2, caractérisé en ce que le quantificateur (4) est formé de manière à pouvoir être commuté sur différentes courbes caractéristiques de quantification, que trois signaux reconstitués ($s_B$, $s_C$ et $s_D$) de points d'image peuvent être dérivés à partir d'un des circuits à retard (19), qu'il est prévu un dispositif de comparaison (36), dans lequel sont sélectionnés le plus grand ($x_2$) de ces trois signaux de points d'image et le plus petit ($x_3$) de ces mêmes signaux , qu'un signal réel et reconstitué ($x_1$) de point d'image est prélevé à la sortie du premier additionneur (8), que sont déterminées les valeurs des différences entre le signal réel de point d'image et ledit signal de point d'image le plus grand ($x_1$-$x_2$), entre le signal réel de point d'image et ledit signal de point d'image le plus petit ($x_1$-$x_3$) et entre ledit signal de point d'image le plus grand et ledit signal de point d'image le plus petit ($x_2$-$x_3$), que pour chacune de ces valeurs des différences, il est prévu un circuit logique (45, 47, 48), dans lequel est déterminée la coordination relativement à un grand nombre de valeurs limites et à des classes d'amplitude ainsi définies, et dans lequel est formé un signal de commande ($s_{ST1}$, $s_{ST2}$, $s_{ST3}$) à spécificité de classe et correspondant à cette coordination, que celui des signaux de commande à spécificité de classe, qui correspond à la valeur la plus grande des trois valeurs des différences ($x_1$-$x_2$, $x_1$-$x_3$, $x_2$-$x_3$), est appliqué, par l'intermédiaire d'un deuxième multiplexeur (50), à une entrée de commande du quantificateur (4), en sorte qu'une courbe caractéristique de quantification associée à ce signal de commande à spécificité de classe, est sélectionnée, qu'en plus du soustracteur (41) formant la différence entre le signal réel ($x_1$) de point d'image et le plus petit ($x_3$) des signaux de point d'image, il est prévu deux autres soustracteurs (41', 41''), la différence entre la valeur limite supérieure ou inférieure ($G^+$, $G^-$) du premier additionneur (8) et ledit signal de point d'image le plus petit ($x_3$) étant respectivement formée dans ces autres soustracteurs, qu'il est prévu un troisième multiplexeur (44) qui est commandé par le dispositif (31) d'identification de dépassement de capicité et qui transmet au circuit logique aval (45) uniquement un résultat, formé dans les trois soustracteurs cités en dernier lieu, en tant que différence $(x_1-x_3)$ entre le signal réel de point d'image et ledit signal de point d'image le plus petit, qu'en plus du soustracteur (42) formant la différence $(x_1-x_2)$ entre le signal réel de point d'image et le signal de point d'image le plus grand, il est prévu encore deux autres soustracteurs (42', 42"), la différence entre la valeur limite inférieure ou supérieure $(G^+, G^-)$ du premier additionneur (8) et le signal de point d'image le plus grand $(x_2)$ étant respectivement formée dans ces deux autres soustracteurs, et qu'il est prévu un quatrième multiplexeur (46), qui est commandé par le dispositif (31) d'identification de dépassement de capacité et qui transmet au circuit logique aval (47) uniquement un résultat, formé dans les trois soustracteurs cités en dernier lieu, en tant que différence $(x_1-x_2)$ entre le signal réel de point d'image et ledit signal de point d'image le plus grand.

4. Montage suivant la revendication 3, caractérisé en ce que le deuxième multiplexeur (50) est commandé par l'intermédiaire d'une unité de commande de choix (49) qui est chargée par le signe des valeurs des différences appliquées aux circuits logiques (45, 47 et 48).

5. Dispositif suivant l'une des revendications précédentes, caractérisé en ce qu'il est prévu une deuxième voie récursive des signaux, qui comporte un deuxième soustracteur supplémentaire (52), un deuxième quantificateur (53), un deuxième additionneur supplémentaire (55) et un deuxième dispositif de prédiction (57) qui comporte un circuit à retard retardant d'une durée d'image, que la première entrée du soustracteur supplémentaire (52) est chargée par les signaux numériques (s) des points d'image, que la deuxième entrée de ce soustracteur (52) est reliée à la sortie du deuxième dispositif de prédiction (57), que la sortie du deuxième dispositif de prédiction (57) est reliée à une deuxième entrée du deuxième additionneur supplémentaire (55), que les entrées du premier et du deuxième quantificateurs (4, 53) sont reliées aux entrées d'une unité de commande du dispositif de prédiction (63), par l'intermédiaire de la sortie de laquelle sont susceptibles d'être commandés deux commutateurs (S1, S3), montés en série avec les sorties du premier et du deuxième quantificateurs (4, 53), et deux commutateurs (S2, S4) montés en aval des sorties, fournissant les valeurs estimées, du premier et du deuxième dispositif de prédiction (3, 57), que les sorties du premier et du deuxième quantificateurs (4, 53) sont reliées entre elles par l'intermédiaire des commutateurs (S1, S3) montés en aval de ces sorties, et que les sorties, fournissant les valeurs estimées du premier et du deuxième dispositif de prédiction (3, 57), sont reliées entre elles par l'intermédiaire des commutateurs (S2, S4) montés en aval de ces sorties.

6. Dispositif suivant l'une des revendications précédentes, caractérisé en ce qu'aux deux entrées du premier additionneur (8) est respectivement monté en amont un registre à décalage (11, 12) chargé par une tension d'impulsions de cadence.

7. Dispositif suivant les revendications 5 et 6, caractérisé en ce qu'aux deux entrées du deuxième additionneur supplémentaire (55) sont branchés en amont deux autres registres à décalage (54, 58) chargés par des tensions d'impulsions de cadence.

EP 0 288 783 B1

# FIG 1

# FIG 2

# FIG 3

FIG 4

# FIG 5